(19) Europäisches Patentamt
European Patent Office
Office européen des brevets

(11) **EP 1 183 520 B1**

(12) **EUROPÄISCHE PATENTSCHRIFT**

(45) Veröffentlichungstag und Bekanntmachung des Hinweises auf die Patenterteilung:
**06.07.2016 Patentblatt 2016/27**

(21) Anmeldenummer: **00929563.5**

(22) Anmeldetag: **26.05.2000**

(51) Int Cl.:
*G01N 21/3504* (2014.01)    *G01N 21/17* (2006.01)
*G01N 21/27* (2006.01)

(86) Internationale Anmeldenummer:
**PCT/EP2000/004838**

(87) Internationale Veröffentlichungsnummer:
**WO 2000/073768 (07.12.2000 Gazette 2000/49)**

(54) **Gassensoranordnung**

Gas sensor configuration

Dispositif de capteur de gaz

(84) Benannte Vertragsstaaten:
**AT BE CH CY DE DK ES FI FR GB GR IE IT LI LU MC NL PT SE**

(30) Priorität: **26.05.1999 DE 19925196**

(43) Veröffentlichungstag der Anmeldung:
**06.03.2002 Patentblatt 2002/10**

(73) Patentinhaber: **GasBeetle GmbH**
**45657 Recklinghausen (DE)**

(72) Erfinder:
• **SHULGA, Aleksandr**
  **D-48149 Münster (DE)**
• **SCHMALE, Udo**
  **D-48429 Rheine (DE)**

• **MÜLLER, Holger**
  **D-48155 Münster (DE)**

(74) Vertreter: **Pfenning, Meinig & Partner mbB**
**Patent- und Rechtsanwälte**
**Joachimsthaler Straße 12**
**10719 Berlin (DE)**

(56) Entgegenhaltungen:
**EP-A1- 0 762 107      EP-A2- 0 533 651**
**CH-A5- 674 264       DE-A1- 3 544 015**
**DE-A1- 4 320 861      DE-A1- 19 525 703**
**DE-C1- 19 520 488     US-A- 3 745 349**
**US-A- 5 341 214**

**Beschreibung**

Die Erfindung betrifft eine Gassensoranordnung nach dem Oberbegriff des Anspruchs 1.

Es ist bekannt, daß viele Gase insbesondere im infraroten Wellenlängenbereich Strahlung absorbieren, wobei diese Absorption auf einer für das betreffende Gas charakteristischen Wellenlänge auftritt, z.B. für $CO_2$ bei 4,24 $\mu$m. Mit Hilfe von Infrarotgassensoren ist es somit möglich, das Vorhandensein einer Gaskomponente bzw. die Konzentration einer Gaskomponente festzustellen.

Bekannte Infrarotgassensoren weisen beispielsweise eine breitbandige Strahlungsquelle, eine Absorptionsstrecke bzw. einen Meßraum, ein wellenlängenselektives Element, z.B. ein Interferenzfilter, ein Fabry-Perot-Filter oder ein Gitter und einen Strahlungsdetektor, beispielsweise einen pyroelektrischen, einen PbSe- oder thermophilen Detektor auf. Die von dem Strahlungsdetektor gemessene Strahlungsintensität ist ein Maß für die Konzentration des bei der eingestellten Wellenlänge absorbierenden Gases. Anstelle der breitbandigen Strahlungsquelle und der wellenlängenselektivierenden Elemente ist auch der Einsatz einer selektiven Strahlungsquelle wie z.B. eine LED oder ein Laser in Kombination mit nichtwellenlängenselektiven Strahlungsempfängern bekannt.

Auch sind photoakustische Gassensoren bekannt. Das Funktionsprinzip eines photoakustischen Gassensors basiert auf der Detektion der Druckänderung, die durch die Erwärmung der Gasmoleküle in dem Meßraum entsteht, mittels eines akustischen Detektors wie z.B. ein Mikrofon. Die Erwärmung wird hervorgerufen durch die Absorption der Strahlungsenergie der Strahlungsquelle durch die zu detektierenden Meßgasmoleküle. Eine dem Stand der Technik entsprechende Ausführung eines photoakustischen Gassensors ist z.B. dem Patent DE 195 25 703 A1 zu entnehmen.

Die Langzeitstabilität derartiger Infrarot- und photoakustischen Gassensoren hängt im Wesentlichen von der Alterung der Strahlungsquellen und von der Verschmutzung des gesamten optischen Systems ab. Die Verschmutzungen werden zur Zeit durch geeignete gaspermeable Filter zum Abhalten von verunreinigenden Partikeln verhindert.

Für die Überwachung der Alterung der Strahlungsquelle wird periodisch der Gassensor bzw. die Gassensoren bezüglich Nullpunkt- und Empfindlichkeitsdrift kontrolliert. Dazu werden die Gassensoren mit einem Gas bzw. Gasgemisch ohne die zu messende Gaskomponente bespült, um die Lage des Nullpunktes zu ermitteln. Nach der Nullpunktskontrolle werden sie mit einem Gasgemisch bekannter Konzentration der zu messenden Gaskomponente bespült, wobei der erhaltene Meßwert mit einem vorgegebenen Wert verglichen wird. Diese Kalibrierung muß in der Regel von geschultem Personal durchgeführt werden und ist somit sehr kostenintensiv.

Eine weitere Möglichkeit, die Alterung der Strahlungsquelle eines Infrarotgassensors zu überwachen besteht darin, einen zweiten Strahlungsdetektor mit einem optischen Filter für die Detektion der Strahlungsintensität bei der Wellenlänge einzusetzen, bei der keine Gaskomponente des Meßgases eine nennenswerte Absorption aufweist (siehe US 5341214). Durch Quotientenbildung der beiden erhaltenen Signale, d.h. Meßsignal zu Referenzsignal, wird ein Altern der Strahlungsquelle ausgeglichen. Da die Detektoren einen Hauptkostenfaktor der Gassensoren darstellen und da eine doppelte Signalverarbeitung benötigt wird, sind solche Gassensoren relativ teuer. Hinzu kommt, daß bei Temperaturänderungen eine unterschiedliche Drift der Detektoren vorkommen kann.

Des Weiteren gibt es Infrarotgassensoren mit zwei Strahlungsquellen, bei denen der Lichtweg der einen Strahlungsquelle nicht durch den Meßgasraum geht, womit eine Verschmutzung der Optik und eine Alterung der anderen Strahlungsquelle ermittelt werden soll. Dieses ist allerdings prinzipbedingt nur mit einem Referenzgas ohne die zu messende Gaskomponente möglich.

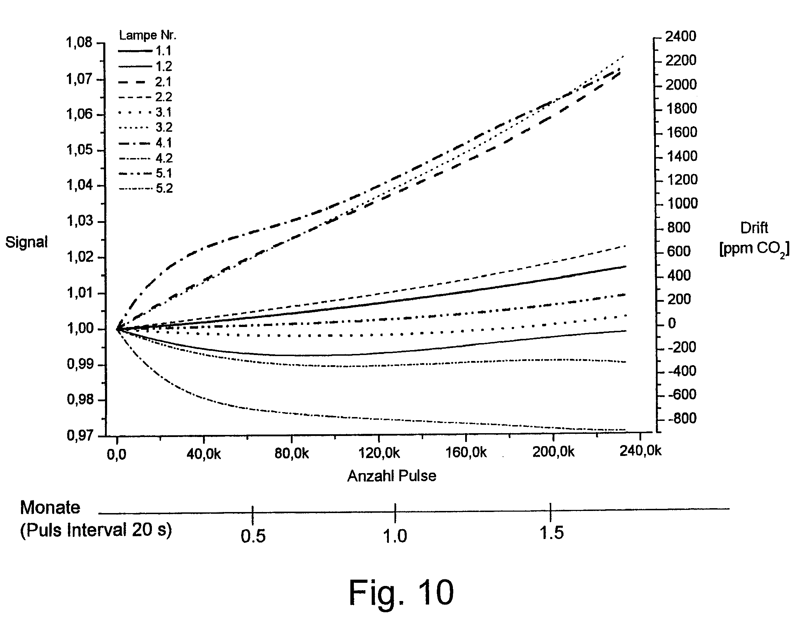

Ebenso ist eine Anordnung bekannt, wo zwei Lichtquellen innerhalb des Gasraums in einem unterschiedlichen Abstand zum Strahlungsdetektor angeordnet sind. Die beiden Strahlungsquellen werden mit unterschiedlichen Frequenzen moduliert und das Detektorsignal demoduliert. Die Ausgangssignale der verschiedenen Frequenzen werden durcheinander geteilt, so daß der Abstand zwischen beiden Quellen den effektiven Lichtweg ergibt. Daß Strahlungsquellen aber nicht gleichmäßig altern (siehe Fig. 10), kann es zu einer Verstärkung der Drift des Sensors durch die Alterung der Strahlungsquellen kommen.

Die EP 0 533 651 A2 betrifft eine Messeinrichtung zur Erfassung einer Strahlung, die von einer in einem Probenbereich befindlichen Probe beeinflusst wird, wobei als Anwendungsbeispiel in der Beschreibung eine Abgasmessung erwähnt wird, bei der das Abgas als Probe durch den Probenbereich geleitet wird. Die Messeinrichtung weist zwei Strahlungsquellen, den Probenbereich, einen Strahlungsdetektor und eine Auswerteeinrichtung auf. Um diese Linearitätsfehler zu erfassen werden mehrere Strahlungsquellen, die selektiv einschaltbar sind, vorgesehen, wobei die Intensitätsbeiträge der mehreren, im Ausführungsbeispiel beiden Beleuchtungsquellen mittels der Messanordnung einzeln bestimmt und in der Auswerteeinrichtung addiert werden. Eine zweite Erfassung bezieht sich auf die Gesamtintensität, d.h. beide Strahlungsquellen werden eingeschaltet und die Gesamtintensität detektiert. Die addierten Einzelintensitäten werden dann der Gesamtintensität gegenübergestellt.

Der Erfindung liegt die Aufgabe zugrunde, eine Gassensoranordnung nach dem Oberbegriff des Anspruchs 1 derart weiter zu entwickeln, daß eine Alterung der Strahlungsquelle zuverlässig ohne großen zusätzlichen Aufwand an Bauelementen und ohne die Notwendigkeit von Kalibriergasen überwacht werden kann. Diese Aufgabe wird erfindungsgemäß durch die kennzeichnenden Merkmale des Anspruchs 1 in Verbindung mit den Merkmalen ihres Oberbegriffs gelöst.

Durch eine zusätzliche Strahlungsquelle, die Referenzstrahlungsquelle, die in zeitlichen Intervallen, gemäß Anspruch 1, eingeschaltet wird, kann die Alterung der Meßstrahlungsquelle durch den Vergleich der Ausgangssignale der Detektoreinrichtung bei Betrieb der Referenzstrahlungsquelle zum Ausgangssignal der Detektoreinrichtung bei Betrieb der Meßstrahlungsquelle erfaßt werden. Die Referenzstrahlungsquelle dient dabei nicht der normalen Messung, sie wird in großen Überwachungsintervallen für die Ermittlung der Alterung der Meßstrahlungsquelle betrieben. Die Alterung der Referenzstrahlungsquelle ist zu vernachlässigen, da sie wesentlich seltener als die Meßstrahlungsquelle, d.h. in großen zeitlichen Intervallen betrieben wird, so daß sie in der Lebenszeit des Sensors nicht merklich altert. Durch die erfindungsgemäße Ausführung ist eine kostengünstige und zuverlässige Erfassung der Alterung der Meßstrahlungsquelle ohne Kalibriergas möglich.

Durch die in den Unteransprüchen angegebenen Maßnahmen sind vorteilhafte Weiterbildungen und Verbesserungen möglich.

Bevorzugterweise ist der effektive Lichtweg zwischen den Strahlungsquellen und dem Detektor gleich lang. Unter diesen Bedingungen sind die Sensorkalibrationskurven für die Referenzquelle und die Meßquelle gleich.

Ein weiterer Vorteil eines Gassensors mit mehr als zwei Quellen liegt in der großen Ausfallsicherheit, d.h., wenn eine Meßquelle ausfällt, wird der Sensor weiter mit der Zusatzquelle betrieben. Die bevorzugte Ausführungsform wird in diesem Falle ein Gassensor mit 3 Strahlungsquellen, eine Meßquelle, eine Referenzquelle, eine Zusatzmeß- bzw. Zusatzreferenzquelle. Die Lebenszeit des Sensors kann dadurch um ein Vielfaches verlängert werden. Zusätzlich kann eine minimale Alterung der Referenzstrahlungsquelle durch die weitere(n) Strahlungsquelle(n) kompensiert werden.

Die Anzahl der Referenzierungsmessungen und damit die Alterung der Referenzstrahlungsquelle können durch die einfache Integration eines zusätzlichen lowcost Strahlungsdetektors (z.B. Si-Photodiode) auf ein notwendiges Minimum reduziert werden. Hierbei wird mittels des zusätzlichen Strahlungsdetektors die Alterung der Messstrahlungsquelle, in einem Spektralbereich (z.B. 850 nm), überwacht, und die Referenzstrahlungsquelle nur in dem Falle eingesetzt, wenn die Strahlungsintensität der Meßquelle gemessen mit dem Lowcost-Detektor sich um einen bestimmten Wert geändert hat.

Bevorzugte Ausführungsbeispiele der Erfindung sind in den Zeichnungen dargestellt und werden in der nachfolgenden Beschreibung näher erläutert. Es zeigen

Fig. 1 eine schematische Darstellung des Aufbaus eines ersten bevorzugten Ausführungsbeispiels einer Gassensoranordnung nach der vorliegenden Erfindung mit beliebiger Weglänge zwischen Referenz- bzw. Meßstrahlungsquelle und Detektor,

Fig. 2 eine schematische Darstellung des Aufbaus eines weiteren bevorzugten Ausführungsbeispiels einer Gassensoranordnung nach der vorliegenden Erfindung mit symmetrischem Aufbau,

Fig. 3 eine schematische Darstellung einer Gassensoranordnung nach noch einem anderen bevorzugten Ausführungsbeispiel der Erfindung,

Fig. 4 eine schematische Darstellung eines bevorzugten Ausführungsbeispiels eines erfindungsgemäßen Infrarotgassensors für die Detektion mehrerer Gaskomponenten,

Fig. 5 ein Aufbaubeispiel einer Infrarotgassensoranordnung nach einem bevorzugten Ausführungsbeispiel der vorliegenden Erfindung,

Fig. 6 ein weiteres Ausführungsbeispiel einer Gassensoranordnung nach einem bevorzugten Ausführungsbeispiel der vorliegenden Erfindung,

Fig. 7 einen schematischen Aufbau eines als photoakustische Gassensoranordnung ausgebildeten bevorzugten Ausführungsbeispiels der Erfindung, wobei die Ausleuchtung der Meßkammer durch Strahlungsquellen unterschiedlich sein kann,

Fig. 8 einen schematischen Aufbau eines als photoakustische Gassensoranordnung ausgebildeten bevorzugten Ausführungsbeispiels der Erfindung, wobei eine gleichmäßige Ausleuchtung der Meßkammer stattfindet,

Fig. 9 ein weiteres bevorzugtes Ausführungsbeispiel der Erfindung mit zusätzlichem Detektor,

Fig. 10 eine beispielhafte Alterungskurve bei verschiedenen Lampen,

Fig. 11 die Alterungskurve einer Meßquelle und ihre Kompensation,

Fig. 12 eine Darstellung der Abhängigkeit des Verhältnisfaktors von der Meßgaskonzentration,

Fig. 13 eine Darstellung der Meßergebnisse eines Sensors nach Fig. 5 über die Zeit.

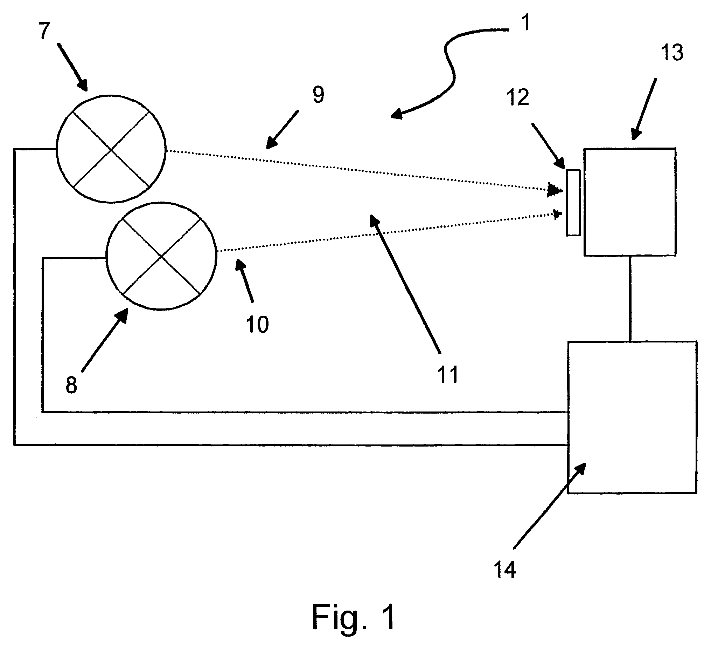

Die Gassensoranordnung nach Fig. 1 ist als Infrarotgassensoranordnung ausgebildet und weist einen üblicherweise als eine Einheit aufgebauten Infrarotgassensor 1 auf, der mit einer Auswerte- und Steuereinrichtung 14, beispielsweise durch eine Steckeranordnung verbunden ist.

In dem schematischen Aufbau des Infrarotgassensors 1 nach Fig. 1 sind mit dem Bezugszeichen 7 eine Meßstrahlungsquelle und mit dem Bezugszeichen 8 eine Referenzstrahlungsquelle bezeichnet. Die Strahlungsquellen 7, 8 sind vorzugsweise identisch in ihren Parametern und strahlen mit einem breitbandigen Strahlungsspektrum ab. Im Gassensorbetrieb wird die Meßstrahlungsquelle 7 für die Messung der Meßgaskonzentration benutzt, dafür kann sie kontinuierlich oder im Pulsbetrieb betrieben werden. Die Referenzstrahlungsquelle 8 wird dagegen nur in großen zeitlichen Intervallen zur Ermittlung der Alterung der Meßstrahlungsquelle 7 eingeschaltet. Die Strahlungsquellen 7, 8 senden Infrarot-Strahlung durch einen Meßraum 11, wo sich das zu detektierende Gas oder das aus mehreren Gaskomponenten zusammengesetzte Gasgemisch befindet. Der Gassensor kann als durchströmte Sensoranordnung, d.h. als eine Durchflußmeßzelle oder als ein auf Diffusion basierender Sensor ausgebildet sein. Im ersten Fall strömt das Gas durch den Meßraum 11, während im zweiten Fall das Gas über eine Membran in den ansonsten geschlossenen Meßraum 11 diffundiert.

Im Abstand zu den Strahlungsquellen 7, 8 ist ein Strahlungsdetektor 13 derart angeordnet, daß nach dem Durchgang des Meßraums 11 die Strahlung auf den Detektor 13 fällt. Ein Interferenzfilter 12 liegt zwischen dem Gasmeßraum 11 und dem Detektor 13 und läßt vorzugsweise nur die Strahlung, die der Absorptionswellenlänge des zu messenden Gases entspricht, durch. Der Interferenzfilter 12 kann auch direkt in das Strahlungsdetektorgehäuse integriert werden. Die Absorptionswellenlängen für unterschiedliche Gase sind z.B. 4,24 $\mu$m für $CO_2$, 3,46 $\mu$m für $CH_4$, 4,64 $\mu$m für CO, 5,3 $\mu$m für NO, 10,9 $\mu$m für Freon. Selbstverständlich können anstelle der Interferenzfilter andere optische Bandpassfilter oder wellenlängenselektierende Elemente verwendet werden.

Der Strahlungsdetektor 13 und die Strahlungsquellen 7 und 8 sind mit der Auswerte- und Steuereinrichtung 14 verbunden, die die Ausgangssignale vom Strahlungsdetektor 13 verarbeitet, die Strahlungsquellen 7,8 ansteuert, die Daten über die Alterung der Meßstrahlungsquelle 7 erfaßt, berücksichtigt und die Informationen über die Konzentration des Meßgases liefert. Die Strahlungsquellen 7, 8 weisen jeweils eine unterschiedliche Weglänge ihrer Strahlengänge 9, 10 zu dem Strahlungsdetektor auf.

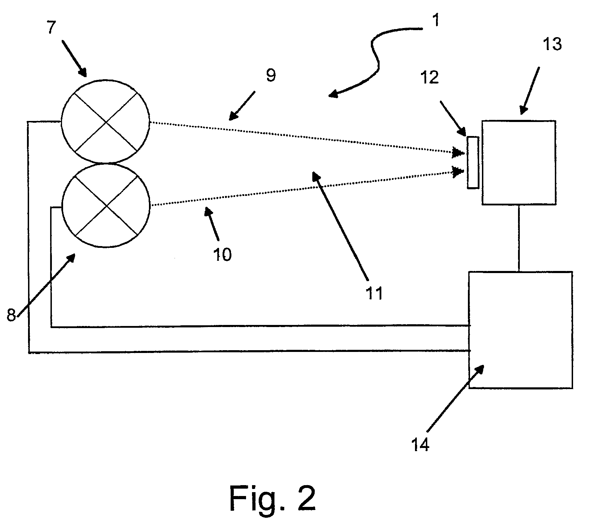

In Fig. 2 ist ein weiteres bevorzugtes Ausführungsbeispiel dargestellt, hier sind die Strahlungsquellen 7, 8 vorzugsweise dicht nebeneinander und symmetrisch bezüglich des Strahlungsdetektor 13 derart angeordnet, daß ihre Strahlung mit etwa gleicher Intensität auf den Strahlungsdetektor 13 fällt und daß die effektive Länge ihrer Strahlengänge 9 und 10 durch den Meßraum 13 gleich ist. Dabei können beide Strahlungsquellen auch im selben Gehäuse integriert sein (z.B. zwei oder mehrere Glühwendeln in einem Glaskolben).

Einerseits kann der Infrarotgassensor 1 so aufgebaut sein, daß der Strahlungsdetektor 13 zusammen mit dem Interferenzfilter 12 direkt gegenüber den Strahlungsquellen 7, 8 plaziert und von den Strahlungsquellen 7, 8 direkt bestrahlt wird. Andererseits kann das von den Strahlungsquellen 7, 8 gesendete Licht entlang der Strahlengänge 9, 10 sowohl innerhalb als auch außerhalb des Meßraums 11 von einer oder mehreren reflektierenden Oberflächen gelenkt und zum Strahlungsdetektor 13 weitergeführt werden.

Das von der Meßstrahlungsquelle 7 bzw. Referenzstrahlungsquelle 8 gesendete Licht geht durch den Meßraum 11, den optischen Filter 12 und fällt letztendlich auf den Strahlungsdetektor 13. In Anwesenheit des zu detektierenden Gases im Meßraum 11 wird ein Teil des durch den Meßraum gestrahlten Lichts im Wellenlängenbereich, der dem Absorptionsbereich des Meßgases entspricht, von Meßgasmolekülen absorbiert. Die dadurch verursachte Abschwächung der von dem Strahlungsdetektor 13 registrierten Lichtintensität folgt dem Lambert-Beerschen-Gesetz

$$I_C = I_o \cdot \exp(-aCL)$$

a ist der Absorptionskoeffizient des zu messenden Gases im Transmissionsbereich des optischen Filters 12,
C ist die Konzentration des zu messenden Gases im Meßraum 11,
L ist die effektive Länge der Strahlungswege 9 bzw. 10,
$I_0$ ist die Intensität der auf den Strahlungsdetektor 13 fallenden Strahlung ohne die Abschwächung durch die Meßgasmoleküle
$I_C$ ist die Intensität der auf den Strahlungsdetektor 13 fallenden Strahlung in Anwesenheit des zu detektierenden Gases im Meßraum 11.

Vor den eigentlichen Messungen wird der Sensor kalibriert, wobei die Parameter z.B. Art und Konzentration des Gases, Temperatur und dgl. bekannt sind, d.h. es wird mindestens eine Sensorkennlinie erstellt, die das Ausgangssignal des Strahlungsdetektors 13 mit der Meßgaskonzentration im Meßraum 11 verbindet.

Die bei der Messung erzeugten Ausgangssignale des Strahlungsdetektors 13 werden an die Auswerte- und Steuereinrichtung 14 geliefert, die unter Verwendung der während der Sensorkalibration ermittelten Sensorkennlinie die Konzentration des Meßgases berechnet. Es kann auch die Gassensortemperatur während der Messung erfaßt und bei der Berechnung der Meßgaskonzentration berücksichtigt werden.

Aufgrund der Anordnungen der Strahlungsquellen 7,8 bezüglich des Strahlungsdetektors 13 gilt unabhängig von der Meßgaskonzentration im Meßraum 11 die Bedingung:

$$U_R = F \cdot U_M$$

Dabei ist

UM das Ausgangssignal des Strahlungsdetektors 13 bei Betrieb der Meßstrahlungsquelle 7,
$U_R$ das Ausgangssignal des Strahlungsdetektors 13 bei Betrieb der Referenzstrahlungsquelle 8,
F ein Verhältnisfaktor, wobei vorzugsweise die Strahlungsquellen 7 und 8 möglichst gleich gewählt werden, was bei einem neuen Sensor zu einem Wert F=1 führen kann.

Da im Zuge von Messungen die Betriebszeit der Meßstrahlungsquelle 7 viel länger als die der Referenzstrahlungsquelle 8 ist, ändert sich der Wert des Verhältnisfaktors F wegen der unterschiedlichen Alterung der beiden Quellen mit der Zeit.

Die Korrektur der Alterung bei einer beliebigen Anordnung der Strahlungsquellen 7, 8 (siehe Fig. 1) wird im Folgenden mathematisch angelegt.

Bei der Anfangskalibration bei der Fertigung zum Zeitpunkt t=0 werden die Kalibrierfunktionen für die beiden Quellen 7, 8 gespeichert.

$$(1) \quad U_M(0,C) = U_M(0,0)\exp(-aCL_M)$$

$$(2) \quad U_R(0,C) = U_R(0,0)\exp(-aCL_R)$$

mit

C - ist die Konzentration des zu messenden Gases im Meßraum
C*- ist die Konzentration des zu messenden Gases im Meßraum während des Korrekturvorgangs
$L_M$- ist der effektive Lichtweg der Strahlung von der Meßstrahlungsquelle zum Detektor
$L_R$- ist der effektive Lichtweg der Strahlung von der Referenzstrahlungsquelle zum Detektor

$U_{Quelle}$ (Zeit, Konzentration) :

$U_M(0,0)$, $U_R(0,0)$ - ist das Ausgangssignal des Detektors bei Betrieb der Meß- bzw. Referenzquelle in der Abwesenheit des zu detektierenden Gases im Meßraum zum Zeitpunkt t=0
$U_M(0,C)$, $U_R(0, C)$ ist das Ausgangssignal des Detektors bei Betrieb der Meß- bzw. Referenzquelle in Anwesenheit des zu detektierenden Gases im Meßraum zum Zeitpunkt t=0

Der Verhältnisfaktor F der Signale für die zwei Quellen ist konzentrationsabhängig:

$$(3) \quad F(0,C) = \frac{U_R(0,C)}{U_M(0,C)} = \frac{U_R(0,0)}{U_M(0,0)}\exp(-aC\Delta L), \Delta L = L_R - L_M$$

Nach der Zeit t im Betrieb wird sich die Kalibrierfunktion der Meßquelle verändern:

$$(4) \quad U_M(t,C) = U_M(t,0)\exp(-aCL_M)$$

Dann wird der Korrekturvorgang durchgeführt. Zu dem Zeitpunkt ist die Konzentration des zu messenden Gases gleich C*. Dann folgt

$$(5) \quad U_M(t,C^*) = U_M(t,0)\exp(-aC^*L_M)$$

$$(6) \quad U_R(t,C^*) = U_R(t,0)\exp(-aC^*L_R)$$

Da $U_R(t,0) = U_R(0,0)$ (die Referenzquelle 8 altert kaum), ist die Gleichung (6) äquivalent zu der Gleichung (2) und die gespeicherte Kalibrierfunktion der Referenzquelle 8 kann für die Berechnung der Konzentration des zu bestimmenden Gases zum Zeitpunkt der Messung t, C*, benutzt werden.

$$(7) \quad C^* = \frac{-1}{aL_R}\ln\left(\frac{U_R(t,C^*)}{U_R(0,0)}\right)$$

Mit Hilfe dieses C* und der Gleichung (1) wird der Signalwert der nicht gealterten Messquelle berechnet. Anschließend wird das Verhältnis aus dem berechneten Signal der nichtgealterten Messquelle (für die die Kalibrationsfunktion bestimmt wurde) und dem tatsächlichen Signal der Messquelle als der Korrekturfaktor K berechnet.

$$(8) \quad K(t) = \frac{U_M(0,C^*)}{U_M(t,C^*)}$$

Aus (4), (5) und (8) folgt für die korrigierte Kalibrierfunktion der Meßquelle

$$(9) \quad U_M(t,C) = 1/K \; U_M(0,C)$$

Die Kalibrierfunktion (9) kann dann bis zum nächsten Korrekturvorgang benutzt werden. Die Korrektur ist ebenfalls bei z.B. einer linear oder quadratisch Kalibrierfunktion möglich.
Die Korrektur der Alterung bei einer symmetrischen Anordnung der Strahlungsquellen 7, 8 (s. Fig. 2) ist wie folgt:
Bei der Verwendung von zwei Strahlungsquellen, die symmetrisch zum Detektor angeordnet sind, gelten zum Zeitpunkt t = 0 folgende Signalabhängigkeiten von der Konzentration:

$$(1') \quad U_M(0,C) = U_M(0,0)\exp(-aCL)$$

$$(2') \quad U_R(0,C) = U_R(0,0)\exp(-aCL)$$

Zum Zeitpunkt t = 0 wird der Verhältnisfaktor F(0,C) zwischen den beiden Strahlungsquellen gebildet.

$$(3') \quad F(0,C) = \frac{U_R(0,C)}{U_M(0,C)} = \frac{U_R(0,0)\exp(-aCL)}{U_M(0,0)\exp(-aCL)} = \frac{U_R(0,0)}{U_M(0,0)} = F(0)$$

Das Verhältnis der Signale für die zwei Quellen ist konzentrationsunabhängig, da die beiden Lichtwege L gleich lang sind.
Daraus folgt:

$$(4') \quad U_M(0,0) = 1/F(0) \ U_R(0,0)$$

Mit der vorher aufgenommenen Kalibrierfunktion (Gleichung' 1') gilt

$$(5') \quad U_M(0,C) = 1/F(0) U_R(0,0) \exp(-aCL)$$

Nach der Zeit t im Betrieb wird sich die Kalibrierfunktion der Meßquelle verändern. Zu dem Zeitpunkt t bei einer beliebigen Konzentration des zu messenden Gases gilt:

$$(6') \quad U_M(t,C*) = U_M(t,0) \exp(-aC*L)$$

$$(7') \quad U_R(t,C*) = U_R(t,0) \exp(-aC*L)$$

Daraus ergibt sich der konzentrationsunabhängige Verhältnisfaktor F(t).

$$(8') \quad F(t,C*) = \frac{U_R(t,C*)}{U_M(t,C*)} = \frac{U_R(t,0)}{U_M(t,0)} = F(t)$$

Da $U_R(t,0) = U_R(0,0)$ (die Referenzquelle altert kaum) ist, gilt

$$(9') \quad U_M(t,0) = 1/F(0) \ U_R(0,0)$$

Die zeitliche Änderung der Strahlungsintensität der Messstrahlungsquelle wird mit der Bildung des Verhältnisfaktors F(t) kompensiert. Zusammen mit Gleichung (6') und Gleichung (9') gilt dann für die Kalibrierfunktion:

$$(10') \quad U_M(t,C) = 1/F(t) U_R(0,0) \exp(-aCL)$$

Der Verhältnisfaktor F(t) wird bis zur nächsten Referenzierung benutzt.
Bei nicht symmetrischer Anordnung der beiden Strahlungsquellen z.B. vor Inbetriebnahme einer Kalibration mit Prüfgas unterzogen. Im Betrieb des Sensors wird zu bestimmten Zeiten die Referenzstrahlungsquelle eingeschaltet.
Schematisch läuft der oben beschriebene Algorithmus zur Korrektur der Alterung der Meßquelle zum Zeitpunkt $t_1$ wie folgt ab:

1. Zuerst wird das Detektorsignal $U_m(t_1)$, beim Betrieb der Meßquelle gemessen.

2. Danach wird das Detektorsignal $U_R(t_2)$, beim Betrieb der Referenzquelle bestimmt.

3. Da die Referenzquelle selten betrieben wird und deshalb stabil bleibt wird der Wert $U_R(t_2)$ mit Hilfe der gespeicherten Kalibrierfunktion für die Referenzquelle dazu benutzt die momentane Umgebungskonzentration vom zu messenden Gas, $C(t_2)$, zu berechnen.

4. Ausgehend vom Wert $C(t_2)$ wird mit Hilfe der inversen Kalibrierfunktion für die Meßquelle das Detektorsignal $U_M(0)$, das dem der nicht gealterten Meßquelle entsprechen würde, berechnet.

5. Danach wird der Korrekturfaktor K durch den Vergleich der Werte $U_M(t_1)$ und $U_M(0)$ bestimmt, z.B. wie folgt: $K(t_1) = U_M(0)/U_M(t_1)$.

6. Anschließend wird die Messung mit der Meßquelle wiederholt und das Detektorsignal $U_M(t_3)$ mit dem wert $U_M(t_1)$ am Anfang des Korrekturvorgangs verglichen. Liegt eine Abweichung vor, die größer als erlaubt ist (das Kriterium wird vorher bestimmt), muß die Messung wiederholt werden. Vorzugsweise sollten die Zeitintervalle $(t_2$-$t_1)$ und $(t_3$-$t_1)$

viel kleiner als die diffusionsbedingte Ansprechzeit des Gassensors sein. Dadurch wird eine nahezu konstante Konzentration des zu bestimmenden Gases während des Korrekturvorgangs gewährleistet.

7. Der wie oben beschriebene berechnet Korrekturfaktor $K(t_1)$ wird jetzt dazu benutzt die alterungsbedingte Verschiebung der Kalibrierfunktion der Meßquelle auszugleichen. Im vorliegenden Falle, z.B., sollen die ab jetzt gemessenen Werte des Detektorsignals mit dem Korrekturfaktor K multipliziert werden: $U_M^{korr} = U_M^{gemessen} x K(t_1)$. Dann wird mit Hilfe der Werte $U_M^{korr}$ und der gespeicherten Kalibrierfunktion für die Meßquelle der richtige Wert der Konzentration des zu messenden Gases C errechnet.

8. Der Wert des Korrekturfaktors $K(t_1)$ wird solange benutzt bis der nächste Korrekturvorgang durchgeführt wird.

9. Anschließend wird die Konzentrationsberechnung mit der gespeicherten Kalibrierfunktion durchgeführt. Diese kann je nach geforderter Genauigkeit, bzw. gefordertem Meßbereich z.B. mit einer linearen, quadratischen oder exponentiellen Funktion ausgeführt sein.

Zur Bestimmung des Verhältnisfaktors F bei einem symmetrischen Aufbau wird ebenfalls zu bestimmten Zeiten im Betrieb des Sensors die Referenzstrahlungsquelle eingeschaltet. Zur Kontrolle, ob die beiden effektiven Lichtwege gleich lang sind, wird z.B. vor Inbetriebnahme der Sensor mit einer bekannten Gaskonzentration des zu messenden Gases beaufschlagt und die Konzentrationsabhängigkeit von Meß- bzw. Referenzstrahlungsquelle überprüft. Sind die Abhängigkeiten gleich wird z.B. nur eine Konzentrationskalibration mit der Referenzquelle vorgenommen.

Schematisch läuft der Algorithmus zur Korrektur der Alterung der Meßquelle zum Zeitpunkt $t_1$ wie folgt ab:

1. Zuerst wird das Detektorsignals $U_M(t_1)$, beim Betrieb der Meßquelle gemessen.

2. Danach wird das Detektorsignal $U_R(t_2)$, beim Betrieb der Referenzquelle bestimmt.

3. Die Bestimmung des Verhältnisfaktors F erfolgt durch den Vergleich der Werte $U_M(t_1)$ und $U_R(t_2)$ z.B. wie folgt: $F(t_1) = U_R(t_2)/U_M(t_1)$

4. Anschließend wird die Messung mit der Meßquelle wiederholt und das Detektorsignal $U_M(t_3)$ mit dem Wert $U_M(t_1)$ am Anfang des Korrekturvorgangs verglichen. Liegt eine Abweichung vor, die größer als erlaubt ist (das Kriterium wird vorher bestimmt), muß die Messung wiederholt werden. Vorzugsweise sollten die Zeitintervalle $(t_2-t_1)$ und $(t_3-t_1)$ viel kleiner als die diffusionsbedingte Ansprechzeit des Gassensors sein. Dadurch wird eine nahezu konstante Konzentration des zu bestimmenden Gases während des Korrekturvorgangs gewährleistet.

5. Der wie oben beschriebene berechnete Verhältnisfaktor $F(t_1)$ wird jetzt dazu benutzt, die alterungsbedingte Verschiebung der Kalibrierfunktion der Meßquelle auszugleichen. In unserem Falle, z.B., sollen die ab jetzt gemessenen Werte des Detektorsignals mit dem F-Faktor multipliziert werden: $U_M^{korr} = U_M^{gemessen} x F(t_1)$. Dann mit Hilfe der Werte $U_M^{korr}$ und der gespeicherten Kalibrierfunktion für die Referenzquelle wird der richtige Wert der Konzentration des zu messenden Gases C errechnet.

6. Der Wert $F(t_1)$ wird solange benutzt, bis der nächste Korrekturvorgang durchgeführt wird.

7. Anschließend wird die Konzentrationsberechnung mit Hilfe der gespeicherten Kalibrierfunktion für die Referenzquelle durchgeführt. Diese kann je nach geforderter Genauigkeit, bzw. gefordertem Meßbereich, z.B. mit einer linearen, quadratischen oder exponentiellen Funktion ausgeführt sein.

Die Korrektur der Alterung der Meßstrahlungsquelle kann durch die folgenden Maßnahmen vorgenommen werden.

Eine Möglichkeit stellt die Normierung des Detektorausgangssignals bei Betrieb der Meßstrahlungsquelle 7 auf den Wert bei Betrieb der Referenzstrahlungsquelle 8 dar. Hierbei bezieht sich die Kennlinie des Gassensors auf das Detektorausgangssignal bei Betrieb der Referenzstrahlungsquelle 8. Während des normalen Betriebs des Sensors wird das Ausgangssignal des Detektors 13 immer mit dem Verhältnisfaktor F multipliziert, bevor die Kennlinie zur Konzentrationsbestimmung auf die Meßwerte angewandt wird. Änderungen des Verhältnisfaktors F mit der Zeit werden somit automatisch berücksichtigt.

In einem anderen bevorzugten Ausführungsbeispiel ist dem Strahlungsdetektor 13 ein variabler Verstärker nachgeschaltet, dessen Verstärkung abhängig vom aktuellen Verhältnisfaktor F bzw. Korrekturfaktor K von der Auswerte- und Steuereinrichtung 14 so nachgeregelt wird, daß die Ausgangssignale des Verstärkers bei Betrieb mit der Meßstrahlungsquelle 7 und bei Betrieb mit der Referenzstrahlungsquelle 8 gleich sind. Bei diesem bevorzugten Ausführungsbeispiel wird die frühzeitige Erkennung des Endes der Lebensdauer der Meßstrahlungsquelle 7 bzw. des Gassensors dadurch ermöglicht, daß die nachgeführte Verstärkung einen maximalen Wert als Grenzwert erreicht, der nicht überschritten werden darf.

In einem weiteren bevorzugten Ausführungsbeispiel ist die Meßstrahlungsquelle 7 regelbar ausgebildet, d.h. die Strahlungsintensität der Meßstrahlungsquelle 7 wird von der Auswerte- und Steuereinheit 14 so nachgeregelt, daß ein bestimmter Wert des Verhältnisfaktors F, z.B. F = 1, bzw. des Korrekturfaktors während des Gassensorbetriebs immer aufrechterhalten wird. Solange die Abweichung des Verhältnisfaktors F(t) bzw. des Korrekturfaktors (K(t) gemessen zu einem Zeitpunkt t von seinem Ausgangswert F(0) bzw. K(0) einen vorgegebenen Grenzwert nicht überschreitet, wird ein Ausgleich der Alterung durch die oben beschriebenen Maßnahmen durchgeführt.

Wenn jedoch die Abweichung zu groß wird und der vorgegebenen Grenzwert überschritten wird, wird beispielsweise von der Auswerte- und Steuereinrichtung 14 ein Signal erzeugt und angezeigt, daß das Ende der Lebensdauer der Meßstrahlungsquelle 7 und damit üblicherweise des Gassensors selbst angibt.

Ein Vorteil des Gassensors 1 ist seine größere Ausfallsicherheit. Wenn die Meßstrahlungsquelle 7 total ausfällt, kann der Infrarotgassensor 1 übergangsweise bis die Störung behoben wird anstelle der Meßstrahlungsquelle 7 mit der Referenzstrahlungsquelle 8 betrieben werden. In einem anderen bevorzugten Ausführungsbeispiel werden mehr als zwei Strahlungsquellen benutzt, wodurch die Lebensdauer des Sensors erhöht und ein zusätzlicher Ausgleich der Alterung in oben beschriebener Weise z.B. der Referenzstrahlungsquelle vorgenommen werden kann.

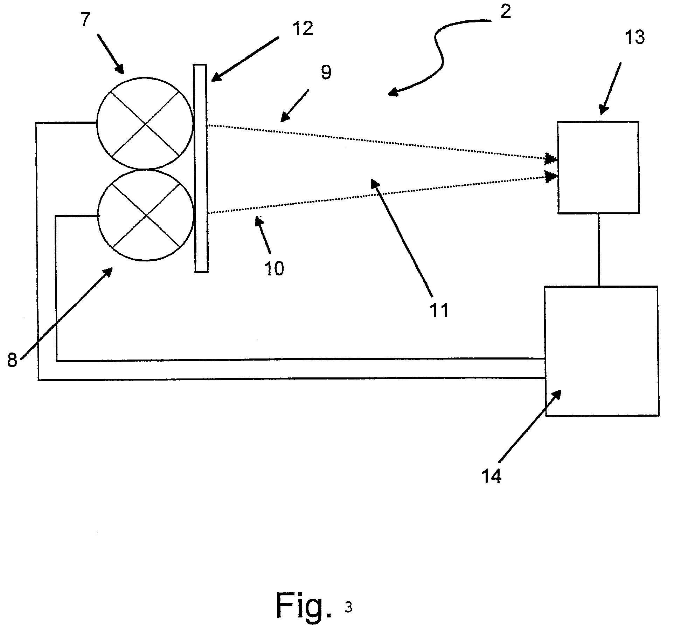

Fig. 3 zeigt einen Infrarotgassensors 2, wobei im Unterschied zu dem Infrarotgassensor 1 (Fig. 1, Fig. 2) der Interferenzfilter 12 zwischen die Strahlungsquellen 7, 8 und den Gasmeßraum 11 geschaltet ist.

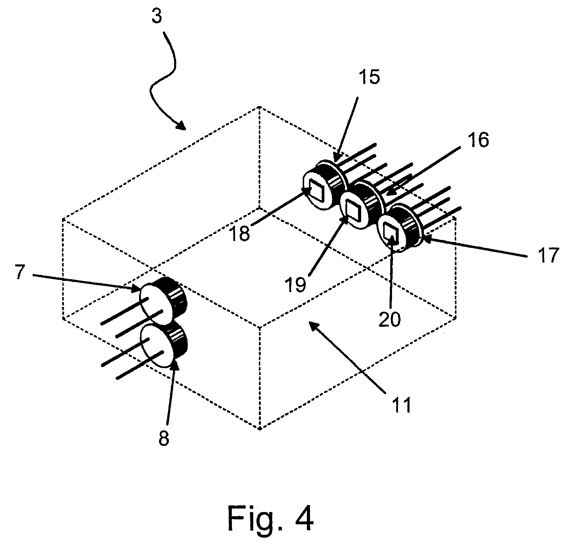

Fig. 4 zeigt einen Infrarotgassensor 3 für die gleichzeitige Messung mehrerer Gaskomponenten. Der Infrarotgassensor 3 beinhaltet mehrere Strahlungsdetektoren 15, 16, 17, die in einer Reihe den Strahlungsquellen 7, 8 gegenüberliegend angeordnet sind. Dazwischen liegt der Meßraum 11. Die Strahlungsquellen 7, 8 werden symmetrisch bezüglich der Strahlungsdetektoren 15,16,17 angeordnet, so daß der Abstand zwischen den beiden Quellen und dem jeweiligen Strahlungsdetektor gleich ist und die beiden Quellen den jeweiligen Strahlungsdetektor etwa gleich beleuchten. Die Strahlungsquellen kann man z. B. dicht nebeneinander so anordnen, daß die Ausrichtungslinie, an welcher die Strahlungsquellen angeordnet ist, senkrecht zu der Ausrichtungslinie, an welcher die Strahlungsdetektoren 15, 16, 17 plaziert sind, verläuft. Der Infrarotgassensor 3 ist für z.B. drei zu messende Gase bzw. Gaskomponenten ausgebildet, wobei die Strahlungsdetektoren 15, 16, 17 mit integrierten Interferenzfiltern 18, 19, 20 auf verschiedene Wellenlängen entsprechend den zu messenden Gasen abgestimmt sind. Es können auch nur zwei Gase bzw. Gaskomponenten gemessen werden und der dritte Detektor dient als Referenz, hierzu besitzt dieser einen Interferenzfilter, der für eine Wellenlänge ausgelegt ist, wo bevorzugterweise kein Gas eine Strahlungsabsorption aufweist (z.B. e,0 μm). Des weiteren ist es ebenfalls möglich, daß alle Detektoren in ein Detektorgehäuse integriert sind (Quaddetektoren).

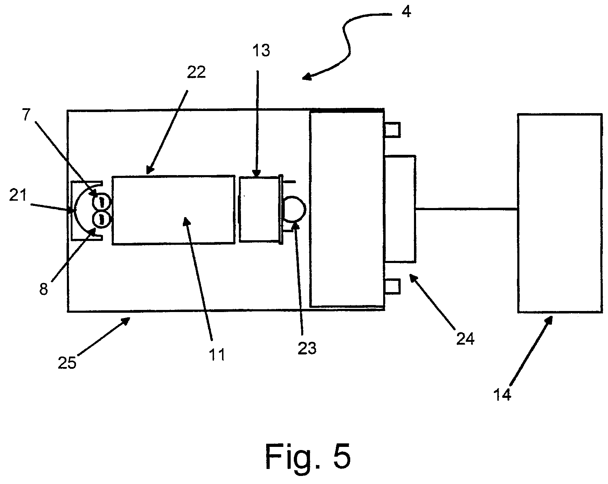

Figur 5 stellt eine weitere bevorzugte Ausführungsform eines Infrarotgassensors 4 dar, der mit der Auswerte- und Steuereinrichtung 14 verbunden ist. Dabei bezeichnet das Bezugszeichen 21 einen Reflektor aus Aluminium, der die aus der Meßstrahlungsquelle 7 bzw. der Referenzstrahlungsquelle 8 austretende Strahlung in den Meßraum 11 reflektiert. Dabei sind die Strahlungsquellen 7 und 8 als Miniaturglühlampen gleicher Art ausgebildet. Die Strahlung der Strahlungsquellen 7, 8 wird durch ein von innen poliertes Edelstahlrohr 22 auf den wellenlängenselektiven Strahlungsdetektor 13 geführt. Das Rohr 22 grenzt den Gasmeßraum 11 ein. Weiterhin ist ein Temperatursensor 23 vorgesehen, der die Temperatur des Strahlungsdetektors 13 bzw. des gesamten Gassensors 4 erfaßt. Alle beschriebenen Bauelemente sind zur mechanischen Stabilisierung und zur elektrischen Kontaktierung auf einer Platine 25 angeordnet.

Die über einen Stecker 24 angeschlossene Auswerte- und Steuereinrichtung 14 verarbeitet die Ausgangssignale vom Strahlungsdetektor 13 und vom Temperatursensor 23, steuert die Strahlungsquellen 7,8 an, erfaßt die Daten über die Alterung der Meßstrahlungsquelle 7 und liefert die Informationen über die Konzentration des Meßgases.

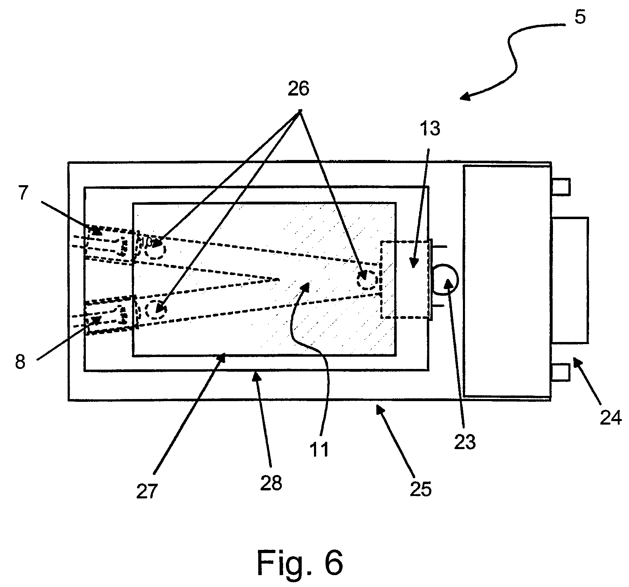

Fig. 6 stellt schematisch eine weitere bevorzugte Ausführungsform für einen mechanisch stabilen und reproduzierbaren Aufbau eines Infrarotgassensors 5 dar. Zur Gewährleistung dieses reproduzierbaren Aufbaus wird ein Metallblock 28 verwendet. Eine Bohrung dient zur Positionierung eines Strahlungsdetektors 13 mit einem vorgeschalteten oder direkt im Detektorsgehäuse integrierten optischen Bandpassfilter. Dem Strahlungsdetektor 13 gegenüberliegend werden zwei Strahlengänge unter einem Winkel von 8° gebohrt, die am Detektor 13 zusammenlaufen. Der Winkel der beiden Strahlenringe kann beliebig groß sein, wird aber vorzugsweise so gewählt, daß die Dimensionen des Sensors bei gegebenem Lichtweg möglichst klein bleiben. In diese Strahlengänge, die den Meßraum 11 bilden, werden zwei Strahlungsquellen 7 und 8 so befestigt, daß sie die gleiche Entfernung zum Detektor haben. Drei zu den Strahlungsgängen senkrechte Bohrungen 26 dienen als Einlaß für das hineindiffundierende zu untersuchende Gas. Diese Bohrungen werden mittels eines gaspermeablen Filters 27 zur Abhaltung von Staub und anderen Partikeln abgedeckt. Der gesamte Metallblock 28 wird zur elektrischen Kontaktierung der Strahlungsquellen 7 und 8 und des Detektors 13 auf einer Platine 25 befestigt. Ein hinter dem Detektor montierter Temperatursensor 23 dient zur Aufnahme der Temperatur. Die elektrische Verbindung zur Auswerte- und Steuerungseinrichtung erfolgt mittels des an der Platine 25 integrierten Stecker 24.

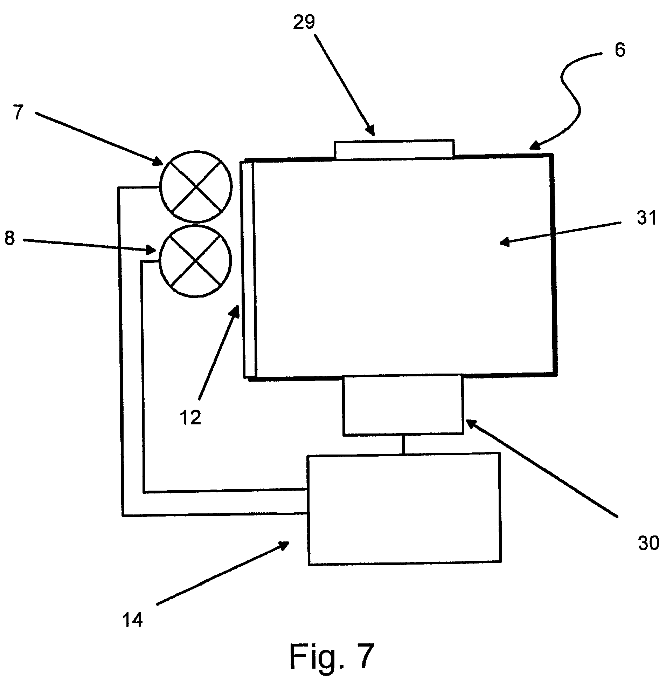

Figur 7 zeigt einen schematischen Aufbau eines photoakustischen Gassensors 6 im Querschnitt mit einer Meßzelle 31 , einer Meßstrahlungsquelle 7 und einer Referenzstrahlungsquelle 8, einem optischen Bandpassfilter 12, einem akustischen Detektor bzw. Mikrofon 30, einer gaspermeablen Membran 29 und einer Auswerte- und Steuereinrichtung 14. Die Strahlungsquellen 7, 8 sind vorzugsweise dicht aneinander angeordnet, so daß sie den Bandpassfilter 12 möglichst identisch bestrahlen. Eine weitere bevorzugte Ausführungsform, bei der jeder Strahlungsquelle ein eigener Bandpassfilter zugeordnet ist, ist auch möglich. Die Ausleuchtung der Meßzelle 31 durch die Strahlungsquellen ist in Fig. 7 unterschiedlich.

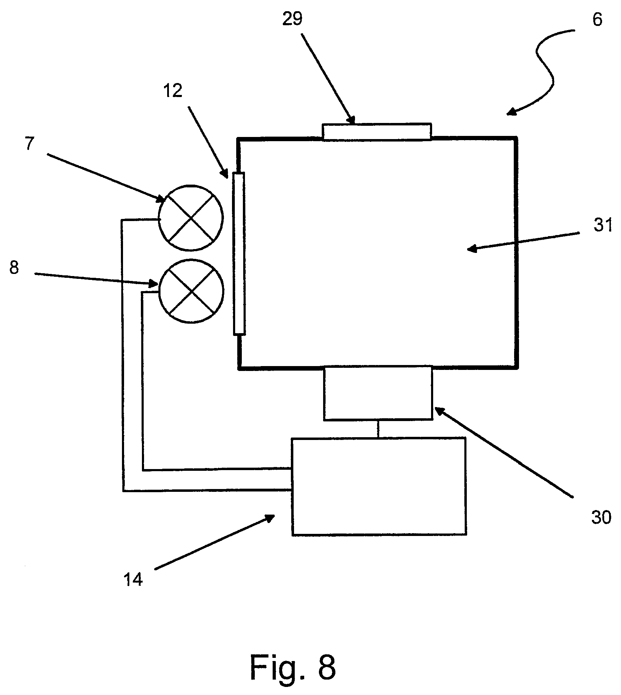

In Fig. 8 sind die Strahlungsquellen 7, 8 im Unterschied zu Fig. 7 in Bezug auf die Meßzelle 31 symmetrisch zu mindestens einer Symmetrieachse der Meßzelle 31 angeordnet und/oder strahlen in einem im wesentlichen gleichen Raumwinkel ab.

Die Strahlungsquellen 7,8 werden gepulst betrieben, jedoch ist auch ein anderer Wechselbetrieb möglich. Nach Filterung am Bandpassfilter 12 gelangt das von den Strahlungsquellen 7, 8 ausgestrahlte Licht in die Meßzelle 31. Der Transmissionsbereich des optischen Bandpassfilters 12 wird so abgestimmt, daß vorzugsweise nur die Strahlung durchgelassen wird, die von den zu messenden Gasmolekülen absorbiert wird. Befindet sich das zu messende Gas in der Umgebung des Gassensors 6 , dringt es durch die gaspermeable Membran 29 in die Meßzelle 31 ein, wo es das Licht absorbiert und sich erwärmt. Durch die Erwärmung dehnt es sich aus und erzeugt eine Druckmodulierung, die vom Mikrofon 30 in ein elektrisches Signal umgewandelt wird. Die Meßstrahlungsquelle 7 wird zum Betrieb des Gassensors 6 benutzt. Die Referenzstrahlungsquelle 8 wird nur selten in vorgegebenen Zeitintervallen regelmäßig benutzt, um die Alterung der Meßstrahlungsquelle 7 zu ermitteln und sie bei der Berechnungen der Meßgaskonzentration zu berücksichtigen. Gegebenenfalls kann die Referenzstrahlungsquelle 8 sowohl zur Überwachung der Funktion des Mikrofons 30 als auch für den Sensorbetrieb beim Ausfall der Meßstrahlungsquelle 7 benutzt werden.

Die Auswertung der Ausgangssignale vom Mikrophon und die Kompensation der Alterung werden so wie in den vorherigen bevorzugten Ausführungsbeispielen durchgeführt.

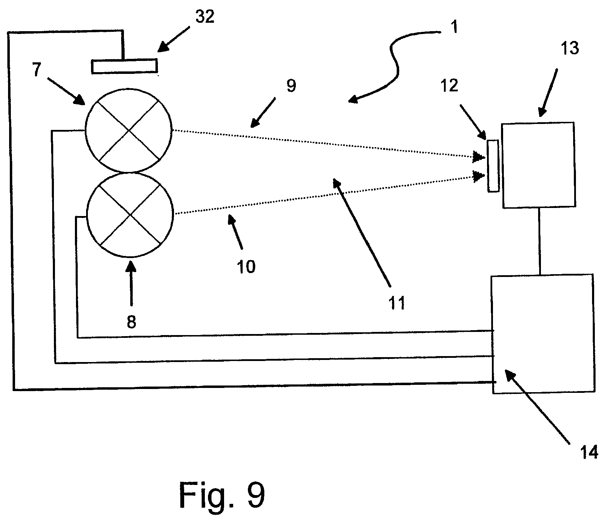

Die Anzahl der Referenzierungsmessungen und damit die Alterung der Referenzquelle 8 können durch die einfache Integration eines der Meßstrahlungsquelle zugeordneten zusätzlichen "lowcost" d.h. Niedrigpreis-Strahlungsdetektors 32 (z.B. Si-Photodiode) entsprechend Fig. 9 auf ein notwendiges Minimum reduziert werden. Hierbei wird mittels des zusätzlichen Strahlungsdetektors 32 die Alterung der Meßstrahlungsquelle 7 bei einer Wellenlänge von z.B. 850 nm überwacht, und die Referenzstrahlungsquelle 8 nur in dem Fall eingesetzt, wenn die Strahlungsintensität der Meßquelle 7, gemessen mit dem Detektor 32, sich um einen bestimmten Wert geändert hat.

Figur 10 zeigt die typische Alterung von Subminiaturlampen am Beispiel des Typs T1 5V 60mA der Firma VCH. Für den Test wurden die Lampen alle 20s für ca. 200ms eingeschaltet. Wie deutlich zu erkennen ist, kann keine allgemeine Aussage über die Alterung der Quelle in Bezug auf die Richtung und die Größe der Signaländerung gemacht werden. Die dargestellte Drift bezieht sich auf einen symmetrisch aufgebauten Gassensor nach Figur 5 mit einer Lichtweglänge von 25 mm und einem pyroelektrischen Strahlungsdetektor vom Typ LHi807 TC G2 der Firma Perkin Elmer Optoelectronics mit integriertem Interferenzfilter.

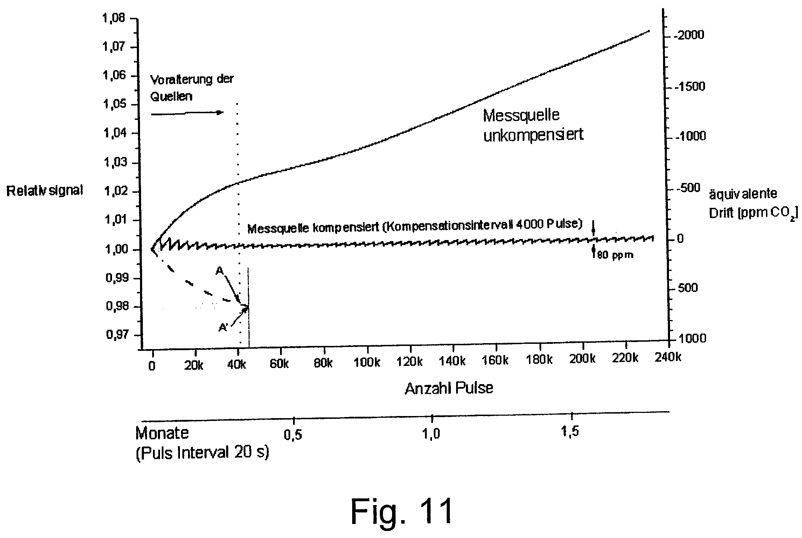

Figur 11 zeigt die beiden am meisten driftenden Quellen aus Figur 10 sowie die resultierenden Ergebnisse einer Driftkompensation. Es ist deutlich zu erkennen, daß nach einer Voralterung von hier ca. 40000 Pulsen eine Alterung der Messstrahlungsquelle in einem Fehlerbereich von ca. $\pm$ 40 ppm $CO_2$ ausgeglichen werden kann.

Da die Referenzquelle bei einem Taktverhältnis von 1:4000 (Referenz/Messquelle) über eine Betriebszeit des Sensors (z.B. 10 Jahre) insgesamt nur einen Tag im Betrieb (A'-A) ist, kann eine Drift der Referenzquelle sehr gering gehalten werden.

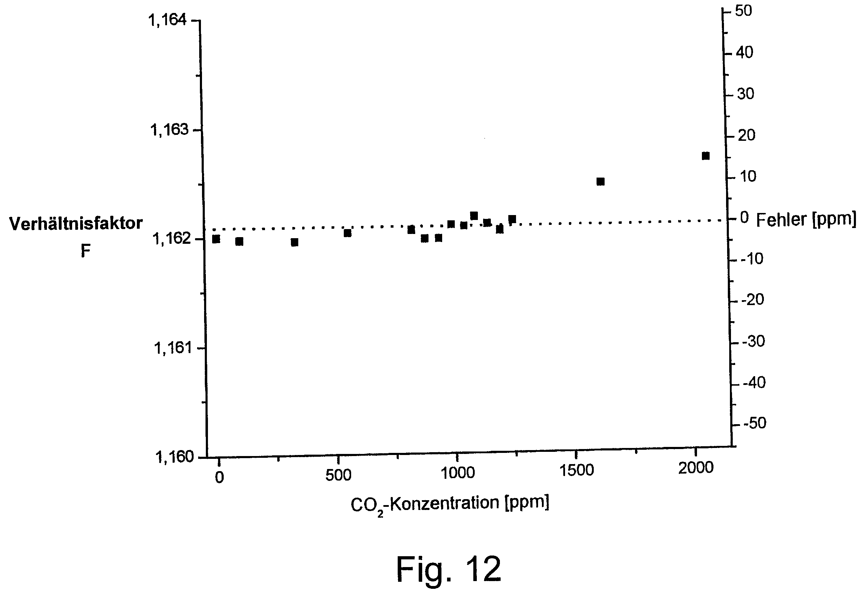

In Figur 12 ist die Abhängigkeit des Korrekturfaktors F von der Messgaskonzentration im Gasmessraum für einen symmetrisch aufgebauten Gassensor nach Figur 5 mit Quellen des Typs VCH T1 5V 115MA und einem Strahlungsdetektor vom Typ LHi807 TC G2 der Firma Perkin Elmer Optoelectronics mit integriertem Interferenzfilter für $CO_2$ dargestellt. Wie deutlich zu erkennen ist, beträgt der Anzeigefehler durch die Abhängigkeit des Korrekturfaktors F dieses Sensors maximal 15ppm $CO_2$.

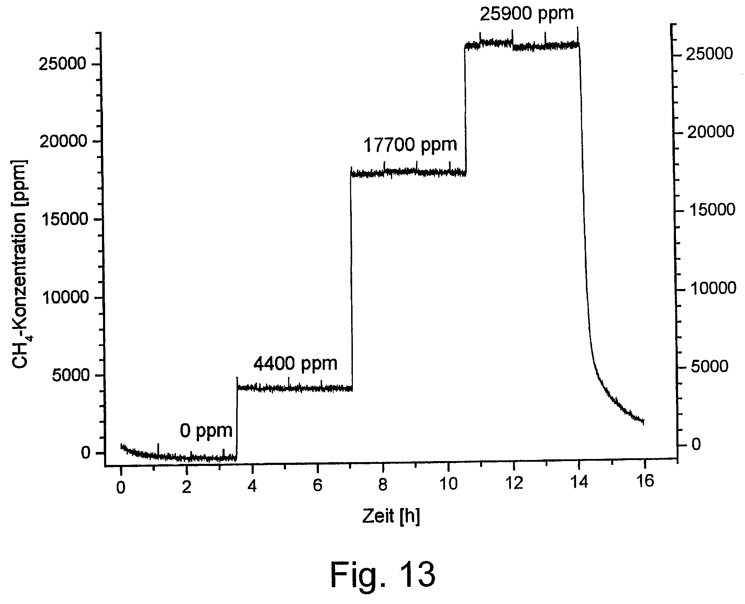

Figur 13 zeigt die Messergebnisse eines symmetrisch aufgebauten Gassensors nach Figur 5 mit Quellen des Typs VCH T1 5V 115mA und einem Strahlungsdetektor vom Typ LHi807 TC G5 der Firma Perkin Elmer Optoelectronics mit integriertem Interferenzfilter für CH4. Hierbei wurde die Messquelle jede Stunde referenziert.

Eine weitere Ursache der Langzeitinstabilität eines IR-Gassensors stellt eine mögliche zeitliche Veränderung der Spannung, die zum Betreiben der Strahlungsquelle benutzt wird, dar. Abweichungen des tatsächlichen Werts dieser Spannung von dem bei der Kalibration vorgegebenen Wert führen zu einer Änderung der Strahlungsintensität der Quelle und dementsprechend zu einer zeitlichen Veränderung des Sensorsignals.

Da die Strahlungsintensität der Strahlungsquellen von der Anregungsspannung abhängt, und da diese je nach Art der verwendeten Bauelementen über die Zeit driften kann, ist möglicherweise ein Ausgleich für diese Drift erforderlich. Es stehen eine Vielzahl von Möglichkeiten zur Verfügung den erforderlichen Driftausgleich zu realisieren.

Um diesen Ausgleich zu ermöglichen wird während des Sensorbetriebs je nach dem angewendeten Meßprotokoll die an der Strahlungsquelle angelegte Spannung vor, während oder nach der Einschaltung der Quelle gemessen und mit dem bei der Kalibration ermittelten Anfangswert der Spannung verglichen. Die auf diesem Wege ermittelten Quellenspannungsveränderungen werden dann explizit dazu verwendet, die dadurch verursachte Änderungen des Signals des Sensors auszugleichen bzw. zu kompensieren. Es können dafür folgende technische Lösungen benutzt werden:

1. Bei der Sensorfertigung wird eine Kalibration des Detektorausgangssignals gegenüber den Veränderungen der Quellenspannung für jede im Sensor eingesetzte Strahlungsquelle ermittelt und gespeichert (U-Kalibration). Später beim Sensorbetrieb werden diese Daten dazu benutzt die mit der Zeit auftretende Drift der Quellenspannung auszugleichen. Bei geringfügigen Veränderungen der Quellenspannung von seinem Anfangswert besteht z.B. eine lineare Abhängigkeit des Detektorsignals von dem Wert der angelegten Quellenspannung, obwohl auch andere Möglichkeiten bestehen können. Die erforderliche U-Kalibration wird zusammen mit der Temperatur- und Konzentrationskalibration des Sensors durchgeführt. Dafür werden das Detektorsignal bei mehreren (bevorzugt zwei) Werten der angelegten Quellenspannung in Nullluft (Konzentration des zu messenden Gases ist Null) und gegebenenfalls bei mindestens einer bekannten Konzentration des zu messenden Gases ermittelt und die daraus resultierende Funktion gespeichert. Zum Beispiel erfolgt eine Messung bei dem Anfangswert der Quellenspannung und die zweite bei einem leicht abweichenden Spannungswert. Technisch kann man die Durchführung dieser U-Kalibration unterschiedlich lösen, z.B.: a) man kann direkt mit der dementsprechend angepassten Sensorschaltung unterschiedliche Quellenspannungen erzeugen, was von dem sensoreigenen Mikrokontroller gesteuert wird; b) andererseits, können bei der U-Kalibration im Werk die erforderlichen variablen Spannungswerte am Kalibrationsstand an den Sensor extern angelegt und anschließend als Kalibrationsdaten (U-Kalibration) abgespeichert werden.

2. Werden bei der Sensorenfertigung Strahlungsquellen eines bestimmten Typs eingesetzt, kann man durch eine Reihenuntersuchung für verschiedene Quellen der selben Charge oder des selben Typs eine statistisch mittlere Abhängigkeit des Detektorausgangssignals von der Quellenspannung ermitteln. Durch diese Funktion wird dann während des Sensorbetrieb die Drift der Quellenspannung für alle Sensoren mit Lampen diesen Typs bzw. dieser Charge kompensiert.

**Patentansprüche**

1. Gassensoranordnung mit einer Strahlung emittierenden Strahlungseinrichtung mit mindestens einer Messstrahlungsquelle (7) und mindestens einer Referenzstrahlungsquelle (8), einem Gasmessraum (11), einer Detektoreinrichtung (13) und einer Auswerte- und Steuereinrichtung (14), wobei bei einem Messvorgang sich im Gasmessraum (11) ein mindestens eine Gaskomponente enthaltendes Messgas befindet und die Auswerte- und Steuereinrichtung (14) die Gaskomponente und/oder deren Konzentration abhängig vom Ausgangssignal der Detektoreinrichtung (13) bestimmt,
**dadurch gekennzeichnet,**
**dass** die Auswerte- und Steuereinrichtung (14) ausgebildet ist, die Referenzstrahlungsquelle (8) wesentlich seltener als die Messstrahlungsquelle (7), d.h. in großen zeitlichen Intervallen, so dass sie in der Lebenszeit der Gassensoranordnung nicht merklich altert, zur Überprüfung des Alterungszustandes der Messstrahlungsquelle (7) einzuschalten, und die Auswerte- und Steuereinrichtung (14) weiterhin ausgebildet ist, aus Abweichungen bezüglich der Ausgangssignale der Detektoreinrichtung (13) bei eingeschalteter Referenzstrahlungsquelle (8) und eingeschalteter Messstrahlungsquelle (7) die Alterung der Messstrahlungsquelle (7) festzustellen und die Alterung gegebenenfalls auszugleichen.

2. Gassensoranordnung nach Anspruch 1, **dadurch gekennzeichnet, dass** die Detektoreinrichtung (13) mindestens einen Strahlungsdetektor (13), der die Änderung der Intensität bei Durchstrahlen des Gasmessraums (11) erfasst, oder ein Mikrophon (30), das die Druckänderung des Messgases durch Absorption der in den Gasmessraum (11) eintretenden Strahlung erfasst, einschließt.

3. Gassensoranordnung nach Anspruch 1 oder Anspruch 2, **dadurch gekennzeichnet, dass** die Messstrahlungsquelle (7) und die Referenzquelle (8) derart angeordnet sind, dass ihre Strahlengänge (9, 10) die gleiche effektive Lichtweglänge zu der Detektoreinrichtung (13) aufweisen, oder dass sie symmetrisch zu einer Symmetrieachse des Gasmessraums (11) liegen.

4. Gassensoranordnung nach einem der Ansprüche 1 bis 3, **dadurch gekennzeichnet, dass** der Gasmessraum (11) mindestens eine Symmetrieachse hat, und dass der Detektor (13) auf einer dieser Symmetrieachsen liegt, und dass die Quellen (7, 8) symmetrisch zu dieser Symmetrieachse im gleichen Abstand zum Detektor angeordnet sind.

**5.** Gassensoranordnung nach einem der Ansprüche 1 bis 3, **dadurch gekennzeichnet, dass** der Gasmessraum (11) mindestens eine Symmetrieachse und ein Lichteintrittsfenster, das insbesondere ein Bandpassfilter (12) ist, aufweist, welches symmetrisch zu einer dieser Symmetrieachsen angeordnet ist, und dass die Quellen (7, 8) symmetrisch zu dieser Symmetrieachse im gleichen Abstand zum Lichteintrittsfenster angeordnet sind.

**6.** Gassensoranordnung nach einem der Ansprüche 1 bis 5, **dadurch gekennzeichnet, dass** die Auswerte- und Steuerschaltung (14) ausgebildet ist, die Alterung aufgrund der Änderung eines Verhältnisses der jeweiligen Ausgangssignale der Detektoreinrichtung (13) bei eingeschalteter Messstrahlungsquelle (7) und bei eingeschalteter Referenzstrahlungsquelle (8) zu bestimmen.

**7.** Gassensoranordnung nach einem der Ansprüche 1 bis 6, **dadurch gekennzeichnet, dass** mindestens ein wellenlängen-selektives Element (12) vorgesehen ist, dessen Wellenlängenbereich auf das Messgas abgestimmt ist, und das zwischen Strahlungsquellen (7, 8) und Gasmessraum (11) und/oder mindestens einem Detektor der Detektoreinrichtung (13) angeordnet ist.

**8.** Gassensoranordnung nach Anspruch 7, **dadurch gekennzeichnet, dass** mehrere Strahlungsdetektoren (15 bis 17) mit unterschiedlichen Wellenlängenselektiven Elementen zur Messung unterschiedlicher Gaskomponenten und/oder deren Konzentration vorgesehen sind.

**9.** Gassensoranordnung nach Anspruch 7 oder Anspruch 8, **dadurch gekennzeichnet, dass** das Wellenlängen-selektive Element (12) als in den Detektor integriertes oder dem Detektor vorgeschaltetes Interferenzfilter (12) ausgebildet ist.

**10.** Gassensoranordnung nach einem der Ansprüche 1 bis 9, **dadurch gekennzeichnet, dass** zum Ausgleich der Alterung die Messstrahlungsquelle (7) in ihrer Strahlungsstärke regelbar ist.

**11.** Gassensoranordnung nach einem der Ansprüche 7 bis 10, **dadurch gekennzeichnet, dass** zum Ausgleich der Alterung der Messstrahlungsquelle (7) dem jeweiligen Detektor ein in seiner Verstärkung regelbarer Verstärker nachgeschaltet ist.

**12.** Gassensoranordnung nach einem der Ansprüche 1 bis 10, **dadurch gekennzeichnet, dass** die Auswerte- und Steuereinrichtung (14) ausgebildet ist, die Alterung der Messstrahlungsquelle (7) bei der Bestimmung der Konzentration abhängig von den Abweichungen zu berechnen.

**13.** Gassensoranordnung nach einem der Ansprüche 1 bis 12, **dadurch gekennzeichnet, dass** der Messstrahlungsquelle (7) ein Strahlungsdetektor zugeordnet ist, der die durch Alterung bedingte Änderung der Strahlungsintensität der Messstrahlungsquelle (7) in einem vom Absorptionsband des zu messenden Gases unterschiedlichen Spektralbereich misst und dass die Auswerte- und Steuereinrichtung (14) ausgebildet ist, die Referenzstrahlungsquelle (8) bei Überschreitung eines vorgegebenen Werts einzusetzen.

**14.** Gassensoranordnung nach einem der Ansprüche 1 bis 13, **dadurch gekennzeichnet, dass** mehrere Strahlungsquellen, vorzugsweise drei, eine Messstrahlungsquelle (7), eine Referenzstrahlungsquellen (8) und eine Zusatz-Messstrahlungsquelle bzw. eine Zusatz-Referenzstrahlungsquelle, vorgesehen sind.

**15.** Gassensoranordnung nach einem der Ansprüche 1 bis 14, **dadurch gekennzeichnet, dass** eine Überwachungseinheit zur Überwachung der Betriebsspannung der Messstrahlungsquelle (7) sowie eine Steuer/Regeleinheit zum Nachregeln und/oder Ausgleich der Spannung bei Abweichung vorgesehen sind.

## Claims

**1.** Gas sensor arrangement comprising a radiation device emitting radiation, having at least one measuring radiation source (7) and at least one reference radiation source (8), a gas measuring chamber (11), a detector device (13) and an evaluation and control device (14), wherein a measuring gas containing at least one gas component is situated in the gas measuring chamber (11) during the measuring procedure and the evaluation and control device (14) determines the gas component and/or its concentration depending on the output signal of the detector device (13),
**characterized in that**

the evaluation and control device (14) is configured to switch on the reference radiation source (8) for checking the aging state of the measuring radiation source (7) considerably less frequently than the measuring radiation source (7), i.e. at great time intervals, such that it does not noticeably age during the lifetime of the gas sensor arrangement, and the evaluation and control device (14) is further designed to determine the aging of the measuring radiation source (7) from deviations with respect to the output signals of the detector device (13) when the reference radiation source (8) is switched on and the measuring radiation source (7) is switched on and to compensate, if necessary, the aging.

2. Gas sensor arrangement according to claim 1, **characterized in that** the detector device (13) comprises at least one radiation detector (13) which records the change in intensity when the gas measuring chamber (11) is irradiated, or a microphone (30) which records the pressure change of the measuring gas by absorption of the radiation entering the gas measuring chamber (11).

3. Gas sensor arrangement according to claim 1 or claim 2, **characterized in that** the measuring radiation source (7) and the reference source (8) are arranged such that their optical paths (9, 10) have the same effective light path length with respect to the detector device (13), or that they are arranged symmetrically with respect to an axis of symmetry of the gas measuring chamber (11).

4. Gas sensor arrangement according to one of claims 1 to 3, **characterized in that** the gas measuring chamber (11) has at least one axis of symmetry, and **in that** the detector (13) is located on one of these axes of symmetry, and **in that** the sources (7, 8) are arranged symmetrically to this axis of symmetry at the same distance from the detector.

5. Gas sensor arrangement according to one of claims 1 to 3, **characterized in that** the gas measuring chamber (11) has at least one axis of symmetry and a light-inlet window, which is in particular a bandpass filter (12), which is arranged symmetrically to one of these axes of symmetry, and **in that** the sources (7, 8) are arranged symmetrically to this axis of symmetry at the same distance from the light-inlet window.

6. Gas sensor arrangement according to one of claims 1 to 5, **characterized in that** the evaluation and control circuit (14) is configured to determine aging due to the change in a ratio of the respective output signals of the detector device (13) when the measuring radiation source (7) is switched on and when the reference radiation source (8) is switched on.

7. Gas sensor arrangement according to one of claims 1 to 6, **characterized in that** at least one wavelength-selective element (12) is provided, the wavelength range of which is matched to the measuring gas, and which is arranged between radiation sources (7, 8) and gas measuring chamber (11) and/or at least one detector of the detector device (13).

8. Gas sensor arrangement according to claim 7, **characterized in that** several radiation detectors (15 to 17) having different wavelength-selective elements are provided to measure different gas components and/or their concentration.

9. Gas sensor arrangement according to claim 7 or claim 8, **characterized in that** the wavelength-selective element (12) is designed as an interference filter (12) integrated into the detector or connected upstream of the detector.

10. Gas sensor arrangement according to one of claims 1 to 9, **characterized in that** the measuring radiation source (7) can be regulated to compensate aging.

11. Gas sensor arrangement according to one of claims 7 to 10, **characterized in that** an amplifier which can be regulated in its gain is connected downstream of the particular detector to compensate aging of the measuring radiation source (7).

12. Gas sensor arrangement according to one of claims 1 to 10, **characterized in that** the evaluation and control device (14) is designed to calculate aging of the measuring radiation device (7) in determining the concentration dependent on the deviations.

13. Gas sensor arrangement according to one of claims 1 to 12, **characterized in that** a radiation detector is assigned to the measuring radiation source (7) which measures the change in radiation intensity of the measuring radiation source (7) caused by aging in a spectral range which differs from the absorption band of the gas to be measured, and **in that** the evaluation and control device (14) is configured to use the reference radiation source (8) if the preset value is exceeded.

14. Gas sensor arrangement according to one of claims 1 to 13, **characterized in that** several radiation sources, mostly three, a measuring radiation source (7), a reference radiation source (8) and an additional measuring radiation source and, respectively, an additional reference radiation source, are provided.

15. Gas sensor arrangement according to one of claims 1 to 14, **characterized in that** a monitoring device for monitoring the operating voltage of the measuring radiation source (7) as well as a control/regulating device for regulating and/or compensating the voltage in case of a deviation are provided.


**Revendications**

1. Ensemble capteur de gaz comprenant un dispositif de rayonnement émettant un rayonnement doté d'au moins une source de rayonnement de mesure (7) et d'au moins une source de rayonnement de référence (8), une chambre de mesure de gaz (11), un dispositif détecteur (13) et un système d'évaluation et de commande (14), où, dans un processus de mesure, au moins une composante gazeuse contenue dans un gaz à mesurer se trouve dans la chambre de mesure de gaz (11) et le système d'évaluation et de commande (14) détermine la composante gazeuse et/ou sa concentration en fonction d'un signal de sortie du dispositif détecteur (13),
**caractérisé en ce**
**que** le système d'évaluation et de commande (14) est conçu pour mettre en marche la source de rayonnement de référence (8) dans l'ensemble de manière moins fréquente que la source de rayonnement de mesure (7), c'est-à-dire à des intervalles de temps élevés, de sorte qu'elle ne vieillisse pas de façon notable pendant la durée de vie de l'ensemble capteur de gaz, pour une surveillance de l'état de vieillissement de la source de rayonnement de mesure (7), et le système d'évaluation et de commande (14) est en outre conçu pour constater le vieillissement de la source de rayonnement de mesure (7) à partir de déviations relatives aux signaux de sortie du dispositif détecteur (13) lorsque la source de rayonnement de mesure (7) est branchée et compenser éventuellement le vieillissement.

2. Ensemble capteur de gaz selon la revendication 1,
**caractérisé en ce que** le dispositif détecteur (13) comporte au moins un détecteur de rayonnement (13), qui détermine la variation de l'intensité lors de la traversée par le rayonnement de la chambre de mesure de gaz (11), ou un microphone (30), qui détermine la variation de pression du gaz de mesure par l'absorption du rayonnement entrant dans la chambre de mesure de gaz (11).

3. Ensemble capteur de gaz selon la revendication 1 ou la revendication 2, **caractérisé en ce que** la source de rayonnement de mesure (7) et la source de référence (8) sont disposées de telle façon que leurs trajets de faisceaux (9, 10) présentent la même longueur de trajet de lumière réel vers le dispositif détecteur (13), ou qu'ils se situent de façon symétrique par rapport à un axe de symétrie de la chambre de mesure de gaz (11).

4. Ensemble capteur de gaz selon l'une des revendications 1 à 3, **caractérisé en ce que** la chambre de mesure de gaz (11) possède au moins un axe de symétrie, et que le détecteur (13) se situe sur un de ces axes de symétrie, et que les sources (7, 8) sont disposées symétriquement par rapport à cet axe de symétrie à une même distance par rapport au détecteur.

5. Ensemble capteur de gaz selon l'une des revendications 1 à 3, **caractérisé en ce que** la chambre de mesure de gaz (11) présente au moins un axe de symétrie et une fenêtre d'entrée de lumière, qui est notamment un filtre de bande passante (12), lequel est disposé symétriquement par rapport à l'un de ces axes de symétrie, et que les sources (7, 8) sont disposées symétriquement par rapport à cet axe de symétrie à une même distance par rapport à la fenêtre d'entrée de lumière.

6. Ensemble capteur de gaz selon l'une des revendications 1 à 5, **caractérisé en ce que** la commutation d'évaluation et de commande (14) est conçue pour déterminer le vieillissement en raison de la modification d'un rapport des signaux de sortie respectifs du dispositif détecteur (13) lorsque la source de rayonnement de mesure (7) est branchée et lorsque la source de rayonnement de référence (8) est branchée.

7. Ensemble capteur de gaz selon l'une des revendications 1 à 6, **caractérisé en ce qu'**au moins un élément sélectif de la longueur d'onde (12) est prévu, dont le domaine de longueurs d'onde est adapté au gaz de mesure, et qui est placé entre les sources de rayonnement (7, 8) et la chambre de mesure de gaz (11) et/ou au moins un détecteur du dispositif détecteur (13).

8. Ensemble capteur de gaz selon la revendication 7, **caractérisé en ce que** plusieurs détecteurs de rayonnement (15 à 17) sont prévus avec des éléments sélectifs de longueurs d'ondes différents pour la mesure de composantes de gaz différentes et/ou de leurs concentrations.

9. Ensemble capteur de gaz selon la revendication 7 ou la revendication 8, **caractérisé en ce que** l'élément sélectif de la longueur d'onde (12) est conçu sous la forme d'un filtre d'interférence (12) intégré dans le détecteur ou branché en amont du détecteur.

10. Ensemble capteur de gaz selon l'une des revendications 1 à 9, **caractérisé en ce que**, pour la compensation du vieillissement, la source de rayonnement de mesure (7) peut être réglée au niveau de sa puissance de rayonnement.

11. Ensemble capteur de gaz selon l'une des revendications 7 à 10, **caractérisé en ce que**, pour la compensation du vieillissement de la source de rayonnement de mesure (7), un amplificateur réglable dans son amplification est disposé en aval du détecteur respectif.

12. Ensemble capteur de gaz selon l'une des revendications 1 à 10, **caractérisé en ce que** le système d'évaluation et de commande (14) est conçu pour calculer le vieillissement de la source de rayonnement de mesure (7) lors de la détermination de la concentration en fonction des déviations.

13. Ensemble capteur de gaz selon l'une des revendications 1 à 12, **caractérisé en ce qu'**un détecteur de rayonnement est associé à la source de rayonnement de mesure (7), qui mesure la modification de l'intensité du rayonnement de la source de rayonnement de mesure (7) induite par le vieillissement dans un domaine spectral différent de la bande d'absorption du gaz à mesurer et que le système d'évaluation et de commande (14) est conçu pour mettre en marche la source de rayonnement de référence (8) lors d'un dépassement d'une valeur prédéfinie.

14. Ensemble capteur de gaz selon l'une des revendications 1 à 13, **caractérisé en ce que** plusieurs sources de rayonnement, de préférence trois, une source de rayonnement de mesure (7), une source de rayonnement de référence (8) et une source de rayonnement de mesure supplémentaire, respectivement, une source de rayonnement de référence supplémentaire, sont prévues.

15. Ensemble capteur de gaz selon l'une des revendications 1 à 14, **caractérisé en ce qu'**une unité de surveillance pour la surveillance de la tension de fonctionnement de la source de rayonnement de mesure (7) ainsi qu'une unité de commande/régulation pour un réajustement, et/ou une compensation, de la tension sont prévues en cas de déviation.

Fig. 1

Fig. 2

Fig. 3

Fig. 4

Fig. 5

Fig. 6

Fig. 7

EP 1 183 520 B1

Fig. 8

Fig. 9

Fig. 10

Fig. 11

Fig. 12

Fig. 13

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19525703 A1
- US 5341214 A
- EP 0533651 A2